# EUROPÄISCHE PATENTSCHRIFT

(11) **EP 2 820 328 B1**
(45) Veröffentlichungstag und Bekanntmachung des Hinweises auf die Patenterteilung: **29.06.2016**
(21) Anmeldenummer: 13700652.4
(22) Anmeldetag: 10.01.2013
(51) Int. Cl.: F16H 3/66

(54) **MEHRGÄNGIGES PLANETENGETRIEBE FÜR EIN FAHRZEUG**
MULTI-SPEED PLANETARY VEHICLE TRANSMISSION
ENGRENAGE PLANÉTAIRE À PLUSIEURS RAPPORTS POUR VÉHICULE

(30) Priorität: 29.02.2012 DE 102012203068
(43) Veröffentlichungstag der Anmeldung: 07.01.2015
(73) Patentinhaber: ZF Friedrichshafen AG, 80846 Friedrichshafen (DE)
(72) Erfinder: BECK, Stefan, 88097 Eriskirch (DE); SIBLA, Christian, 88045 Friedrichshafen (DE); RIEGER, Wolfgang, 88048 Friedrichshafen (DE)
(86) Internationale Anmeldenummer: PCT/EP2013/050356
(87) Internationale Veröffentlichungsnummer: WO 2013/127547

(56) Entgegenhaltungen:
- DE-A1-102009 047 277
- US-A1- 2009 118 062
- US-B1- 7 771 305

## Beschreibung

Die vorliegende Erfindung betrifft ein mehrgängiges Planetengetriebe für ein Fahrzeug gemäß der im Oberbegriff der Patentansprüche 1-3,7 und 8 näher definierten Art.

Ein solches Planetengetriebe ist aus der DE 10 2009 047 277 A1 bekannt.

Beispielsweise aus der Druckschrift DE 10 2007 055 808 A1 ist ein Automatgetriebe in Planetenbauweise bekannt, umfassend vier Planetenradsätze und sechs Schaltelemente sowie acht drehbare Wellen. Sämtliche Planetenradsätze sind als Minus-Planetenradsätze ausgeführt. Mit den insgesamt sechs Schaltelementen ist ein selektives Schalten von zehn Vorwärtsgängen und zwei Rückwärtsgängen realisierbar. Aus dem Schaltschema des bekannten Automatgetriebes ergibt sich jedoch, dass zum Realisieren jeder Gangstufe jeweils nur drei der vorgesehenen Schaltelemente geschlossen sind. Durch die geöffneten Lamellenschaltelemente ergeben sich somit unerwünscht hohe Schleppverluste.

Der vorliegenden Erfindung liegt die Aufgabe zu Grunde, ein Planetengetriebe der eingangs beschriebenen Gattung vorzuschlagen, welches möglichst kompakt mit geringem Bauaufwand und kostengünstig herstellbar ist und zudem geringere Schleppverluste aufweist.

Diese Aufgabe wird erfindungsgemäß durch die Merkmale der Patentanspruche 1-3,7 und 8 gelöst, wobei sich vorteilhafte Ausgestaltungen aus den Unteransprüchen, der Beschreibung und den Zeichnungen ergeben.

Es wird ein mehrgängiges Planetengetriebe, beispielsweise ein Automatik- bzw. Automatgetriebe für ein Fahrzeug vorgeschlagen, welches vier Planetenradsätze bzw. Planetenradsatzebenen und sechs Schaltelemente zum Realisieren mehrerer Gangstufen umfasst. Dabei ist einer der Planetenradsätze als Plus-Planetenradsatz ausgeführt, wobei eine als Antrieb ausgeführte Welle den Planetenradträger des ersten Planetenradsatzes mit einem dritten Schaltelement verbindet und wobei eine als Abtrieb ausgeführte Welle zumindest mit dem Plus-Planetenradsatz gekoppelt ist, indem die zweite Welle mit dem Hohlrad des PlusPlanetenradsatzes verbunden ist, sodass bei jeder Gangstufe zumindest vier der sechs Schaltelemente betätigt bzw. geschlossen sind.

Auf diese Weise werden durch die geringe Anzahl von geöffneten Schaltelementen im geschalteten Zustand Schleppverluste bei dem erfindungsgemäßen Planetengetriebe minimiert. Es ist möglich, dass einzelne oder mehrere Minus-Planetenradsätze in weitere Plus-Planetenradsätze umgewandelt werden, wenn gleichzeitig die Steg- bzw. Planetenradträgeranbindung und die Hohlradanbindung vertauscht werden und der Betrag der Standübersetzung des jeweiligen Planetenradsatzes um den Wert 1 erhöht wird und wenn es die Verbindungen der Elemente des Planetenradsatzes zulassen. Ein Minus-Planetenradsatz weist bekanntlich an dem Planetenradträger verdrehbar gelagerte Planetenräder auf, die mit dem Sonnenrad und dem Hohlrad dieses Planetenradsatzes kämmen, so dass sich das Hohlrad bei festgehaltenem Planetenradträger und drehendem Sonnenrad in zur Sonnenraddrehrichtung entgegengesetzter Richtung dreht. Ein Plus-Planetenradsatz weist bekanntlich an seinem Planetenradträger verdrehbar gelagerte und miteinander in Zahneingriff stehende innere und äußere Planetenräder auf, wobei das Sonnenrad dieses Planetenradsatzes mit den inneren Planetenrädern und das Hohlrad dieses Planetenradsatzes mit den äußeren Planetenrädern kämmen, so dass sich das Hohlrad bei festgehaltenem Planetenradträger und drehendem Sonnenrad in zur Sonnenraddrehrichtung gleicher Richtung dreht.

Vorzugsweise kann bei dem vorgeschlagenen Planetengetriebe eine koaxiale Anordnung von Antriebswelle und Abtriebswelle zur Realisierung eines Standardantriebes bei einem Fahrzeug realisiert werden. Es ist jedoch auch möglich, dass eine Front-Querbauweise mit dem Planetengetriebe an einem Fahrzeug realisiert wird, indem die geometrische Anordnung und damit die Reihenfolge der Elemente des Planetengetriebes, wie zum Beispiel die Anordnung der einzelnen Planetenradsätze und der Schaltelemente verändert wird, soweit es die Bindbarkeit der Getriebeelemente zulässt, sodass dann beispielsweise die Antriebswelle und die Abtriebswelle zueinander versetzt angeordnet werden.

Als Anfahrelement können bei dem erfindungsgemäßen Planetengetriebe ein hydrodynamischer Drehmomentwandler oder eine hydrodynamische Kupplung eingesetzt werden. Es ist auch denkbar, dass eine zusätzliche Anfahrkupplung oder auch eine integrierte Anfahrkupplung oder Anfahrbremse verwendet werden. Darüber hinaus ist es möglich, dass zusätzlich elektrische Maschinen eingesetzt werden. Beispielsweise kann auf zumindest einer der Wellen eine elektrische Maschine oder eine sonstige Kraft-/Leistungsquelle angeordnet werden. Es ist auch denkbar, dass an zumindest einer der Wellen ein Freilauf zum Gehäuse oder auch zu einer anderen Welle angeordnet werden kann. Als Schaltelemente sind sowohl reibschlüssige als auch formschlüssige Schaltelemente denkbar. Vorzugsweise können das zweite als Bremse ausgebildete Schaltelement und das sechste als Kupplung ausgebildete Schaltelement jeweils als Klauenschaltelement ausgeführt sein.

Bei dem erfindungsgemäßen Planetengetriebe kann zumindest einer der Planetenradsätze, beispielsweise der dritte Planetenradsatz intern verblockt werden, indem zwei Elemente des dritten Planetenradsatzes über ein zugeordnetes Schaltelement, beispielsweise dem fünften Schaltelement miteinander verbunden werden. Aus den verschiedenen Anordnungsmöglichkeiten des Schaltelements ergeben sich somit auch verschiedene Verblockungsvarianten. Beispielsweise kann das Hohlrad des dritten Planetenradsatzes über eine fünfte Welle und über das fünfte Schaltelement mit dem Sonnenrad zum Verblocken des Planetenradsatzes verbunden werden. Ferner ist es auch denkbar, dass der Planetenradträger des dritten Planetenradsatzes über das fünfte Schaltelement und über die siebente Welle mit dem Sonnenrad zum Verblocken verbunden wird. Darüber hinaus kann auch der Planetenradträger des dritten Planetenradsatzes über die achte Welle und über das fünfte Schaltelement sowie über die fünfte Welle mit dem Hohlrad zum Verblocken verbunden werden.

Im Rahmen einer nächsten Weiterbildung der Erfindung können bei dem vorgeschlagenen Planetengetriebe auch verschiedene wirkungsgleiche Anordnungsvarianten bezüglich eines dem dritten Planetenradsatz zugeordneten Schaltelements beispielsweise dem vierten, als Kupplung ausgebildeten Schaltelement realisiert werden. Zum einen ist es möglich, dass das vierte Schaltelement an dem Steg bzw. an dem Planetenradträger des dritten Planetenradsatzes positioniert ist. Es ist auch möglich, dass das vierte Schaltelement am Hohlrad oder auch an dem Sonnenrad des dritten Planetenradsatzes angeordnet ist. Aus den sich daraus ergebenden wirkungsgleichen Alternativen können verschiedene konstruktive Anordnungsmöglichkeiten bei dem Radsatz des erfindungsgemäßen Planetengetriebes realisiert werden, um beispielsweise eine Anpassung des Planetengetriebes an einen vorgegebenen Bauraum zu ermöglichen.

Nachfolgend wird die vorliegende Erfindung anhand der Zeichnungen weiter erläutert. Es zeigen:
Figur 1 eine schematische Ansicht einer ersten Ausführungsvariante eines erfindungsgemäßen Planetengetriebes;
Figur 2 ein Schaltschema des erfindungsgemäßen Planetengetriebes;
Figur 3 eine schematische Ansicht einer zweiten Ausführungsvariante des erfindungsgemäßen Planetengetriebes mit einer Variante zur Verblockung des dritten Planetenradsatzes;
Figur 4 eine schematische Ansicht einer dritten Ausführungsvariante des erfindungsgemäßen Planetengetriebes mit einer weiteren Variante zur Verblockung des dritten Planetenradsatzes;
Figur 5 eine schematische Ansicht einer vierten Ausführungsvariante des erfindungsgemäßen Planetengetriebes mit einer geänderten Schaltelementanordnung; und
Figur 6 eine schematische Ansicht einer fünften Ausführungsvariante des erfindungsgemäßen Planetengetriebes mit einer weiteren geänderten Schaltelementanordnung.

In den Figuren sind verschiedene Ausführungsvarianten des erfindungsgemäßen Planetengetriebes, beispielsweise als automatisches Getriebe bzw. Automatgetriebe für ein Fahrzeug dargestellt.

Unabhängig von den jeweiligen Ausführungsvarianten umfasst das Planetengetriebe vier Planetenradsätzen RS1, RS2, RS3, RS4 und sechs Schaltelemente A, B, C, D, E, F sowie neun Wellen I, II, III, IV, V, VI, VII, VIII, IX, wobei unter dem Begriff Welle ein oder mehrere Bauteile beliebiger konstruktiver Form zu verstehen sind, die zumindest zwei Elemente des Planetengetriebes verbinden bzw. koppeln. Bei dem erfindungsgemäßen Planetengetriebe sind vorgesehene Gehäusekopplungen über als Bremse ausgeführte Schaltelemente realisiert, so dass keine festen Gehäusekopplungen vorgesehen sind.

Als Planetenradsätze werden Minus-Planetenradsätze und Plus-Plänetenradsätze eingesetzt, wobei bei den gezeigten Ausführungsvarianten die ersten drei Planetenradsätze RS1, RS2, RS3 jeweils als Minus-Planetenradsätze und der vierten Planetenradsatz RS4 als Plus-Planetenradsatz ausgeführt sind.

Unabhängig von den jeweiligen Ausführungsvarianten sind das erste Schaltelement A und das zweite Schaltelemente B jeweils als Bremsen ausgeführt, um schaltbare Gehäusekopplungen zu realisieren. Das dritte Schaltelement C, das vierte Schaltelement D, das fünfte Schaltelement E und das sechste Schaltelement F sind jeweils als Kupplung ausgeführt.

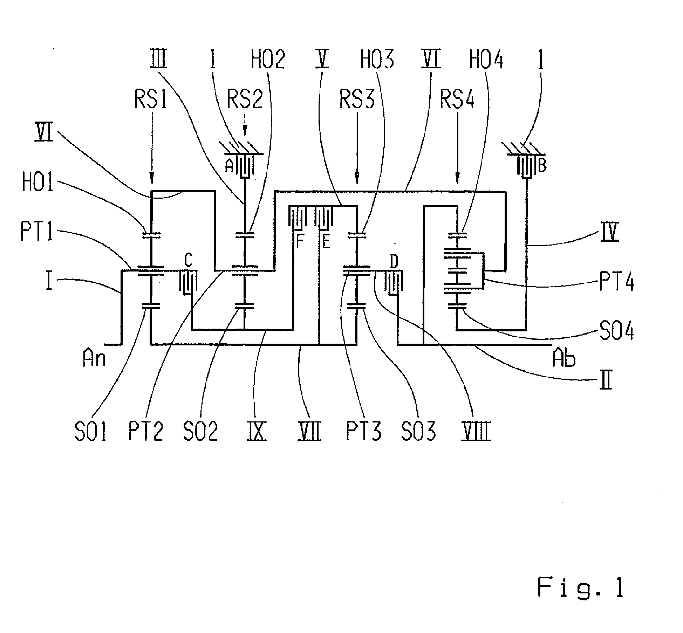

Bei der in Figur 1 gezeigten ersten Ausführungsvariante des erfindungsgemäßen Planetengetriebes ist die erste Welle I als Antrieb An des Getriebes mit dem Planetenradträger PT1 des ersten Planetenradsatzes RS1 und mit einem dritten Schaltelement C, welches als Lamellenkupplung ausgeführt ist, verbunden. Die zweite Welle II als Abtrieb Ab des Getriebes ist mit einem Hohlrad H04 des vierten Planetenradsatzes RS4 und mit einem vierten Schaltelement D, welches ebenfalls als Lamellenkupplung ausgebildet ist, verbunden. Zur Realisierung der ersten schaltbaren Gehäusekopplung ist eine dritte Welle III vorgesehen, mit der das Hohlrad H02 des zweiten Planetenradsatzes RS2 mit dem ersten, als Lamellenbremse ausgebildeten Schaltelement A verbunden ist, so dass das Hohlrad HO2 bei geschlossenem ersten Schaltelement A mit dem Gehäuse 1 verbunden ist. Eine vierte Welle IV stellt die zweite schaltbare Gehäusekopplung dar, bei der das Sonnenrad SO4 des vierten Planetenradsatzes RS4 über die vierte Welle IV mit dem zweiten, als Lamellenbremse ausgebildeten Schaltelement B verbunden ist, so dass bei geschlossenem Schaltelement B das Sonnenrad SO4 mit dem Gehäuse 1 verbunden ist. Eine fünfte Welle V verbindet das Hohlrad H03 des dritten Planetenradsatzes RS3 sowohl mit dem fünften Schaltelement E als auch mit dem sechsten Schaltelement F, die jeweils als Lamellenkupplungen ausgebildet sind. Während eine sechste Welle VI das Hohlrad HO1 des ersten Planetenradsatzes RS1 mit dem Planetenradträger PT2 des zweiten Planetenradsatzes RS2 und mit dem Planetenradträger PT4 des vierten Planetenradsatzes RS4 verbindet, wobei der Planetenradträger PT4 des vierten Planetenradsatzes RS4 sowohl für die inneren Planetenräder PRI4, die mit dem Sonnenrad S04 kämmen, als auch für die äußeren Planetenräder PRA4 die Lagerung bildet. Die äußeren Planetenräder PRA4 kämmen sowohl mit den inneren Planetenräder PRI4 als auch mit dem Hohlrad H04. Eine siebente Welle VII verbindet das Sonnenrad SO1 des ersten Planetenradsatzes RS1 mit dem fünften Schaltelement E sowie mit dem Sonnenrad S03 des dritten Planetenradsatzes RS3. Mithilfe einer achten Welle VIII wird eine Verbindung zwischen dem vierten Schaltelement D und dem Planetenradträger PT3 des dritten Planetenradsatzes RS3 gebildet. Eine neunte Welle IX verbindet das dritte Schaltelement C mit dem Sonnenrad SO2 des zweiten Planetenradsatzes RS2 und mit dem sechsten Schaltelement F.

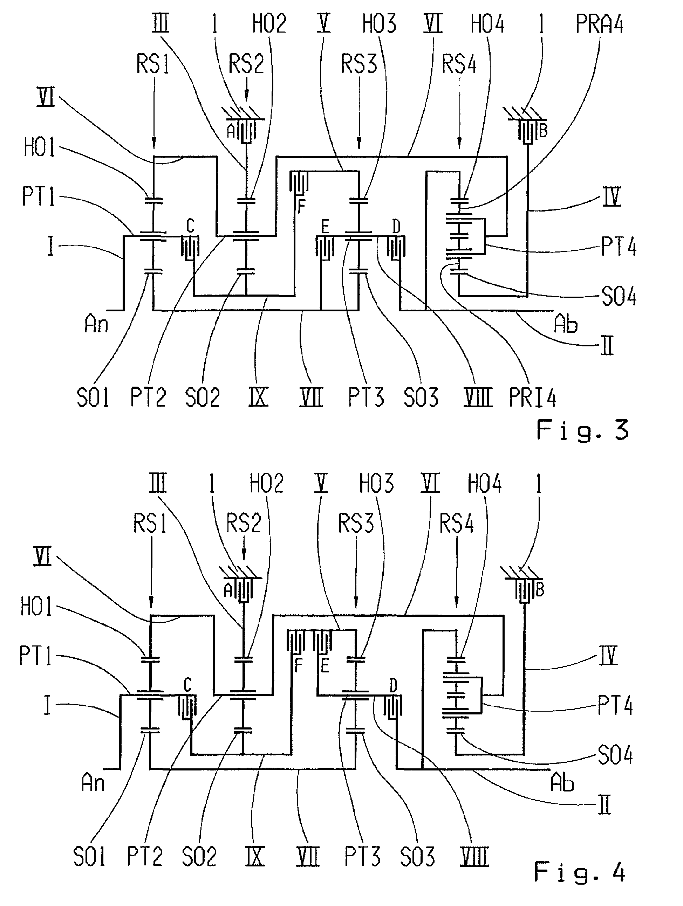

Ausgehend von der ersten Ausführungsvariante gemäß Figur 1 ist in Figur 3 eine zweite Ausführungsvariante dargestellt, bei der eine alternative Verblockungsmöglichkeit des dritten Planetenradsatzes RS3 dargestellt ist. Bei der zweiten Ausführungsvariante wird die Verblockung im Unterschied zur ersten Ausführungsvariante dadurch realisiert, dass der Planetenradträger PT3 über das fünfte Schaltelement E und über die siebente Welle VII mit dem Sonnenrad S03 des dritten Planetenradsatzes RS3 verbindbar ist.

Gemäß Figur 4 ist eine dritte Ausführungsvariante des erfindungsgemäßen Planetengetriebes gezeigt, bei der eine weitere Verblockungsvariante des dritten Planetenradsatzes RS3 dargestellt ist. Bei der dritten Ausführungsvariante wird die Verblockung im Unterschied zur ersten und zweiten Ausführungsvariante dadurch realisiert, dass der Planetenradträger PT3 über die achte Welle VIII und über das fünfte Schaltelement E sowie über die fünfte Welle V mit dem Hohlrad H03 des dritten Planetenradsatzes RS3 verbindbar ist.

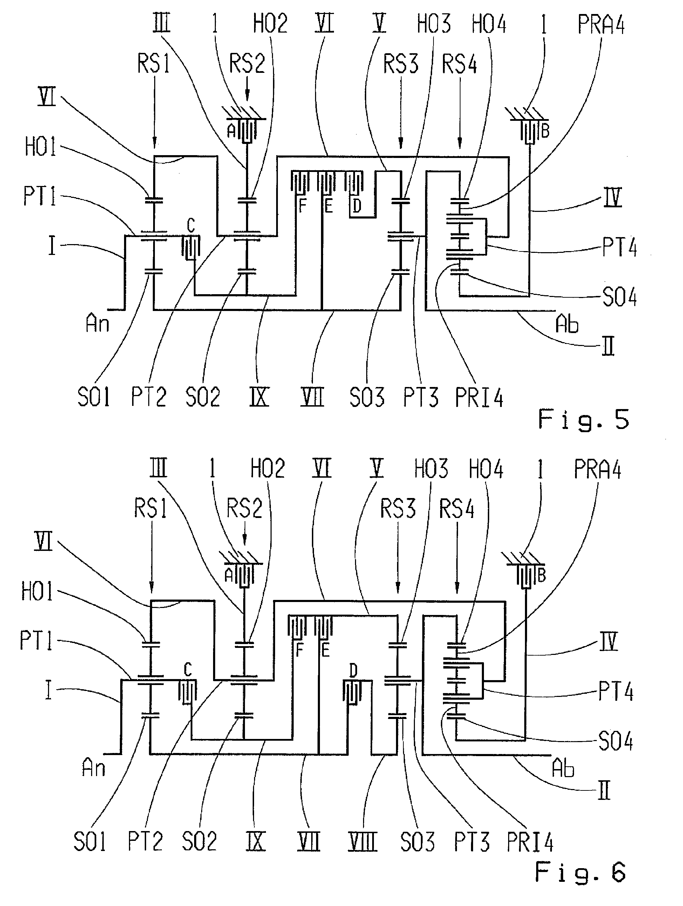

In den Figuren 5 und 6 sind vierte und fünfte Ausführungsvarianten des erfindungsgemäßen Planetengetriebes gezeigt, bei denen bezogen auf die erste Ausführungsvariante Anordnungsvarianten bezüglich des vierten Schaltelements D dargestellt sind. Die gezeigten Ausführungsvarianten sind wirkungsgleich zu der ersten Ausführungsvariante.

Im Einzelnen ergibt sich bei der vierten Ausführungsvariante gemäß Figur 5, dass die erste Welle I als Antrieb An mit dem Planetenradträger PT1 des ersten Planetenradsatzes RS1 und mit dem dritten Schaltelement C verbunden ist, wobei die zweite Welle II als Abtrieb Ab mit dem Planetenradträger PT3 des dritten Planetenradsatzes RS3 und mit dem Hohlrad H04 des vierten Planetenradsatzes RS4 verbunden ist. Durch die dritte Welle III ist das Hohlrad H02 des zweiten Planetenradsatzes RS2 über das erste Schaltelement A gehäusefest verbindbar. Die vierte Welle IV kann das Sonnenrad S04 des vierten Planetenradsatzes RS4 bei geschlossenem zweiten Schaltelement B gehäusefest verbinden. Durch die fünfte Welle V wird das Hohlrad H03 des dritten Planetenradsatzes RS3 mit dem vierten Schaltelement D verbunden. Die sechste Welle VI verbindet das Hohlrad HO1 des ersten Planetenradsatzes RS1 mit dem Planetenradträger PT2 des zweiten Planetenradsatzes RS2 sowie mit dem Planetenradträger PT4 des vierten Planetenradsatzes RS4. Durch die siebente Welle VII wird das Sonnenrad SO1 des ersten Planetenradsatzes RS1 mit dem Sonnenrad S03 des dritten Planetenradsatzes RS3 und mit dem fünften Schaltelement E verbunden. Schließlich verbindet die neunte Welle IX das sechste Schaltelement F mit dem Sonnenrad S02 des zweiten Planetenradsatzes RS2 sowie mit dem dritten Schaltelement C.

Bei der fünften Ausführungsvariante gemäß Figur 6 wird im Einzelnen die erste Welle I als Antrieb An des Getriebes mit dem Planetenradträger PT1 des ersten Planetenradsatzes RS1 und mit dem dritten Schaltelement C verbunden. Die zweite Welle II als Abtrieb Ab des Getriebes verbindet den Planetenradträger PT3 des dritten Planetenradsatzes RS3 mit dem Hohlrad H04 des vierten Planetenradsatzes RS4. Die dritte Welle III verbindet das Hohlrad H02 des zweiten Planetenradsatzes RS2 bei geschlossenem ersten Schaltelement A mit dem Gehäuse G. Durch die vierte Welle IV ist das Sonnenrad S04 des vierten Planetenradsatzes RS4 über das zweite Schaltelement B mit dem Gehäuse 1 verbindbar. Durch die fünfte Welle V wird das Hohlrad HO3 des dritten Planetenradsatzes RS3 mit dem fünften Schaltelement E und mit dem sechsten Schaltelement F verbunden. Die sechste Welle VI verbindet das Hohlrad HO1 des ersten Planetenradsatzes RS1 mit dem Planetenträger PT2 des zweiten Planetenradsatzes RS2 sowie mit dem Planetenträger PT 4 des vierten Planetenradsatzes RS4. Mit der siebenten Welle VII wird das Sonnenrad SO1 des ersten Planetenradsatzes RS1 mit dem vierten Schaltelement D und mit dem fünften Schaltelements E verbunden, während durch die achte Welle VIII das Sonnenrad S03 des dritten Planetenradsatzes RS3 mit dem vierten Schaltelement D verbunden wird. Schließlich verbindet die neunte Welle IX das sechste Schaltelement F mit dem Sonnenrad SO2 des zweiten Planetenradsatzes RS2 sowie mit dem dritten Schaltelement C.

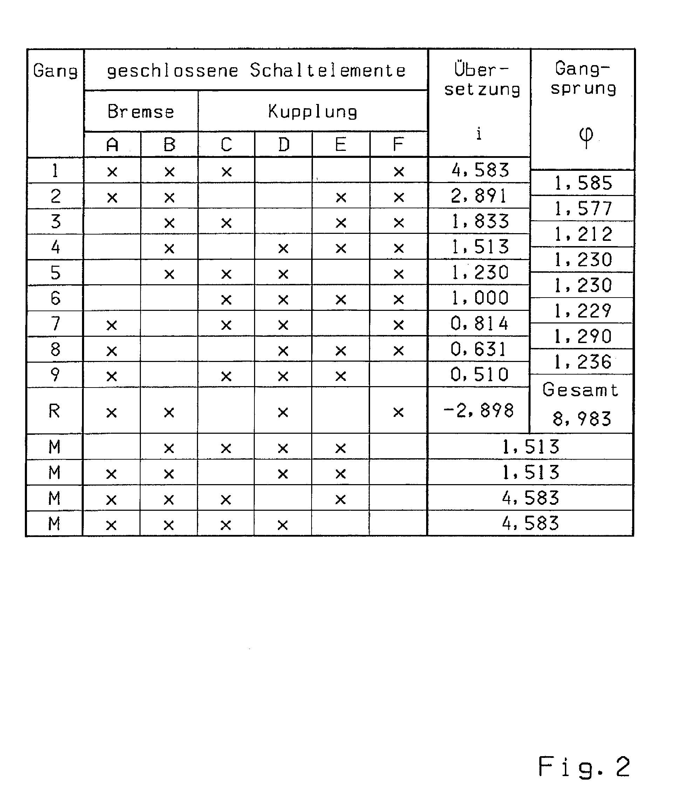

In dem in Figur 2 dargestellten Schaltschema sind die zum Realisieren der verschiedenen Gangstufen zu schließenden bzw. zu aktivierenden Schaltelemente A, B, C, D, E, F tabellarisch dargestellt, wobei jeder Gangstufe eine Übersetzung i und zwischen verschiedenen Gangstufen der jeweilige Gangsprung ϕ angegeben sind. Neben den neun angegebenen Vorwärtsgängen 1, 2, 3, 4, 5, 6, 7, 8, 9 und dem einen angegebenen Rückwärtsgang R sind vier zusätzliche oder alternative mit M bezeichnete Gänge für das erfindungsgemäße Planetengetriebe angegeben. Vorzugsweise können die beiden ersten mit M bezeichneten Gänge als alternative vierte Vorwärtsgange und die beiden letzten mit M bezeichneten Gänge als alternative erste Vorwärtsgänge eingesetzt werden.

Als bevorzugte Standübersetzung kann bei dem ersten Planetenradsatz RS1 ein Wert von etwa i₀=-1,600, bei dem zweiten Planetenradsatz RS2 ein Wert von etwa i₀=-1,500, bei dem dritten Planetenradsatz RS3 ein Wert von etwa i₀=-3,200 und bei dem vierten Planetenradsatz RS4 ein Wert von etwa i₀=2,200 verwendet werden.

Die verschiedenen Ausführungsvarianten des erfindungsgemäß beanspruchten Planetengetriebes zeichnen sich durch einen besonders geringen Bauaufwand und geringe Herstellungskosten sowie geringem Gewicht aus. Ferner ergibt sich eine harmonische Übersetzungsreihe durch das vorgeschlagene Schaltschema mit niedrigen Absolut- und Relativdrehzahlen sowie niedrigen Planetenradsatz- und Schaltelementmomenten. Durch die gewählten Bindungen der verschiedenen Elemente bei dem vorgeschlagenen Planetengetriebe ergeben sich zudem durchgehend optimierte Verzahnungswirkungsgrade. Dadurch, dass bei jeder Gangstufe mindestens vier Lamellen-Schaltelemente geschlossen sind, ergeben sich zusätzlich geringere Schleppverluste.

### Bezugszeichen

- 1: erster Vorwärtsgang
- 2: zweiter Vorwärtsgang
- 3: dritter Vorwärtsgang
- 4: vierter Vorwärtsgang
- 5: fünfter Vorwärtsgang
- 6: sechster Vorwärtsgang
- 7: siebenter Vorwärtsgang
- 8: achter Vorwärtsgang
- 9: neunter Vorwärtsgang
- R: Rückwärtsgang
- M: alternative oder zusätzliche Gänge
- 1: Gehäuse
- RS1: erster Planetenradsatz
- PT1: Planetenradträger des ersten Planetenradsatzes
- HO1: Hohlrad des ersten Planetenradsatzes
- SO1: Sonnenrad des ersten Planetenradsatzes
- RS2: zweiter Planetenradsatz
- PT2: Planetenradträger des zweiten Planetenradsatzes
- H02: Hohlrad des zweiten Planetenradsatzes
- SO2: Sonnenrad des zweiten Planetenradsatzes
- RS3: dritter Planetenradsatz
- PT3: Planetenradträger des dritten Planetenradsatzes
- HO3: Hohlrad des dritten Planetenradsatzes
- SO3: Sonnenrad des dritten Planetenradsatzes
- RS4: vierte Planetenradsatz
- PT4: Planetenradträger des vierten Planetenradsatzes
- HO4: Hohlrad des vierten Planetenradsatzes
- SO4: Sonnenrad des vierten Planetenradsatzes
- PRI4: innere Planetenräder des vierten Planetenradsatzes
- PRA4: äußere Planetenräder des vierten Planetenradsatzes
- I: erste Welle
- II: zweite Welle
- III: dritte Welle
- IV: vierte Welle
- V: fünfte Welle
- VI: sechste Welle
- VII: siebente Welle
- VIII: achte Welle
- IX: neunte Welle
- An: Antrieb
- Ab: Abtrieb
- A: erstes Schaltelement
- B: zweites Schaltelement
- C: drittes Schaltelement
- D: viertes Schaltelement
- E: fünftes Schaltelement
- F: sechstes Schaltelement

## Patentansprüche

1. Mehrgängiges Planetengetriebe für ein Fahrzeug mit vier Planetenradsätzen (RS1, RS2, RS3, RS4) und mit mehreren Wellen (I, II, III, IV, V, VI, VII, VIII, IX) sowie mit sechs Schaltelementen (A, B, C, D, E, F), durch deren Betätigung mehrere Gangstufen realisierbar sind, **dadurch gekennzeichnet, dass** der vierte Planetenradsatz (RS4) als Plus-Planetenradsatz ausgeführt ist, dass eine erste Welle (I) als Antrieb (An) mit einem Planetenradträger (PT1) des ersten Planetenradsatzes (RS1) und einem dritten Schaltelement (C) verbunden ist, dass eine zweite Welle (II) als Abtrieb (Ab) zumindest mit einem Hohlrad (H04) des vierten Planetenradsatzes (RS4) verbunden ist, und dass zum Realisieren jeder Gangstufe mindestens vier der Schaltelemente (A, B, C, D, E, F) geschlossen sind, wobei die erste Welle (I) als Antrieb (An) mit dem Planetenradträger (PT1) des ersten als Minus-Planetenradsatz ausgebildeten Planetenradsatzes (RS1) und dem dritten Schaltelement (C) verbunden ist, wobei die zweite Welle (II) als Abtrieb (Ab) mit einem vierten Schaltelement (D) und mit dem Hohlrad (H04) des vierten Planetenradsatzes (RS4) verbunden ist, wobei eine dritte Welle (III) mit einem Hohlrad (H02) des zweiten als Minus-Planetenradsatz ausgebildeten Planetenradsatzes (RS2) und mit einem ersten Schaltelement (A) zur Gehäusekopplung verbunden ist, wobei eine vierte Welle (IV) mit einem Sonnenrad (S04) des vierten Planetenradsatzes (RS4) und mit einem zweiten Schaltelement (B) zur Gehäusekopplung verbunden ist, wobei eine fünfte Welle (V) mit einem Hohlrad (HO3) des dritten als Minus-Planetenradsatz ausgebildeten Planetenradsatzes (RS3) und mit einem fünften Schaltelement (E) und mit einem sechsten Schaltelement (F) verbunden ist, wobei eine sechste Welle (VI) mit einem Hohlrad (H01) des ersten Planetenradsatzes (RS1) und mit einem Planetenradträger (PT2) des zweiten Planetenradsatzes (RS2) sowie mit einem Planetenradträger (PT4) des vierten Planetenradsatzes (RS4) verbunden ist, wobei eine siebente Welle (VII) mit einem Sonnenrad (S01) des ersten Planetenradsatzes (RS1) und mit einem Sonnenrad (S03) des dritten Planetenradsatzes (RS3) und mit dem fünften Schaltelement (E) verbunden ist, wobei eine achte Welle (VIII) mit einem Planetenträger (PT3) des dritten Planetenradsatzes (RS3) und mit dem vierten Schaltelement (D) verbunden ist, und wobei eine neunte Welle (IX) mit dem sechsten Schaltelement (F) und mit einem Sonnenrad (S02) des zweiten Planetenradsatzes (RS2) sowie mit dem dritten Schaltelement (C) verbunden ist.

2. Mehrgängiges Planetengetriebe für ein Fahrzeug mit vier Planetenradsätzen (RS1, RS2, RS3, RS4) und mit mehreren Wellen (I, II, III, IV, V, VI, VII, VIII, IX) sowie mit sechs Schaltelementen (A, B, C, D, E, F), durch deren Betätigung mehrere Gangstufen realisierbar sind, **dadurch gekennzeichnet, dass** der vierte Planetenradsatz (RS4) als Plus-Planotenradsatz ausgeführt ist, dass eine erste Welle (I) als Antrieb (An) mit einem Planetenradträger (PT1) des ersten Planetenradsatzes (RS1) und einem dritten Schaltelement (C) verbunden ist, dass eine zweite Welle (II) als Abtrieb (Ab) zumindest mit einem Hohlrad (H04) des vierten Planetenradsatzes (RS4) verbunden ist, und dass zum Realisieren jeder Gangstufe mindestens vier der Schaltelemente (A, B, C, D, E, F) geschlossen sind, wobei die erste Welle (I) als Antrieb (An) mit dem Planetenradträger (PT1) des ersten als Minus-Planetenradsatz ausgebildeten Planetenradsatzes (RS1) und dem dritten Schaltelement (C) verbunden ist, wobei die zweite Welle (II) als Abtrieb (Ab) mit einem vierten Schaltelement (D) und mit dem Hohlrad (H04) des vierten Planetenradsatzes (RS4) verbunden ist, wobei eine dritte Welle (III) mit einem Hohlrad (H02) des zweiten als Minus-Planetenradsatz ausgebildeten Planetenradsatzes (RS2) und mit einem ersten Schaltelement (A) zur Gehäusekopplung verbunden ist, wobei eine vierte Welle (IV) mit einem Sonnenrad (S04) des vierten Planetenradsatzes (RS4) und mit einem zweiten Schaltelement (B) zur Gehäusekopplung verbunden ist, wobei eine fünfte Welle (V) mit einem Hohlrad (HO3) des dritten als Minus-Planetenradsatz ausgebildeten Planetenradsatzes (RS3) und mit einem sechsten Schaltelement (F) verbunden ist, wobei eine sechste Welle (VI) mit einem Hohlrad (HO1) des ersten Planetenradsatzes (RS1) und mit einem Planetenradträger (PT2) des zweiten Planetenradsatzes (RS2) sowie mit einem Planetenradträger (PT4) des vierten Planetenradsatzes (RS4) verbunden ist, wobei eine siebente Welle (VII) mit einem Sonnenrad (SO1) des ersten Planetenradsatzes (RS1) und mit einem Sonnenrad (S03) des dritten Planetenradsatzes (RS3) und mit einem fünften Schaltelement (E) verbunden ist, wobei eine achte Welle (VIII) mit einem Planetenträger (PT3) des dritten Planetenradsatzes (RS3) und mit dem vierten Schaltelement (D) verbunden ist, und wobei eine neunte Welle (IX) mit dem sechsten Schaltelement (F) und mit einem Sonnenrad (S02) des zweiten Planetenradsatzes (RS2) sowie mit dem dritten Schaltelement (C) verbunden ist.

3. Mehrgängiges Planetengetriebe für ein Fahrzeug mit vier Planetenradsätzen (RS1, RS2, RS3, RS4) und mit mehreren Wellen (I, II, III, IV, V, VI, VII, VIII, IX) sowie mit sechs Schaltelementen (A, B, C, D, E, F), durch deren Betätigung mehrere Gangstufen realisierbar sind, **dadurch gekennzeichnet, dass** der vierte Planetenradsatz (RS4) als Plus-Planetenradsatz ausgeführt ist, dass eine erste Welle (I) als Antrieb (An) mit einem Planetenradträger (PT1) des ersten Planetenradsatzes (RS1) und einem dritten Schaltelement (C) verbunden ist, dass eine zweite Welle (II) als Abtrieb (Ab) zumindest mit einem Hohlrad (H04) des vierten Planetenradsatzes (RS4) verbunden ist, und dass zum Realisieren jeder Gangstufe mindestens vier der Schaltelemente (A, B, C, D, E, F) geschlossen sind, wobei die erste Welle (I) als Antrieb (An) mit dem Planetenradträger (PT1) des ersten als Minus-Planetenradsatz ausgebildeten Planetenradsatzes (RS1) und dem dritten Schaltelement (C) verbunden ist, wobei die zweite Welle (II} als Abtrieb (Ab) mit einem vierten Schaltelement (D) und mit dem Hohlrad (H04) des vierten Planetenradsatzes (RS4) verbunden ist, wobei eine dritte Welle (III) mit einem Hohlrad (H02) des zweiten als Minus-Planetenradsatz ausgebildeten Planetenradsatzes (RS2) und mit einem ersten Schaltelement (A) zur Gehäusekopplung verbunden ist, wobei eine vierte Welle (IV) mit einem Sonnenrad (S04) des vierten Planetenradsatzes (RS4) und mit einem zweiten Schaltelement (B) zur Gehäusekopplung verbunden ist, wobei eine fünfte Welle (V) mit einem Hohlrad (H03) des dritten als Minus-Planetenradsatz ausgebildeten Planetenradsatzes (RS3) und mit einem fünften Schaltelement (E) und mit einem sechsten Schaltelement (F) verbunden ist, wobei eine sechste Welle (VI) mit einem Hohlrad (H01) des ersten Planetenradsatzes (RS1) und mit einem Planetenradträger (PT2) des zweiten Planetenradsatzes (RS2) sowie mit einem Planetenradträger (PT4) des vierten Planetenradsatzes (RS4) verbunden ist, wobei eine siebente Welle (VII) mit einem Sonnenrad (SO1) des ersten Planetenradsatzes (RS1) und mit einem Sonnenrad (S03) des dritten Planetenradsatzes (RS3) verbunden ist, wobei eine achte Welle (VIII) mit einem Planetenträger (PT3) des dritten Planetenradsatzes (RS3) und mit dem vierten Schaltelement (D) verbunden ist, und wobei eine neunte Welle (IX) mit dem sechsten Schaltelement (F) und mit einem Sonnenrad (SO2) des zweiten Planetenradsatzes (RS2) sowie mit dem dritten Schaltelement (C) verbunden ist.

4. Planetengetriebe nach Anspruch 1, **dadurch gekennzeichnet, dass** zum Verblocken des dritten Planetenradsatzes (RS3) das Hohlrad (H03) des dritten Planetenradsatzes (RS3) über die fünfte Welle (V) und über das fünfte Schaltelement (E) mit dem Sonnenrad (SO3) des dritten Planetenradsatzes (RS3) verbindbar ist.

5. Planetengetriebe nach Ansprunch 2, **dadurch gekennzeichnet, dass** zum Verblocken des dritten Planetenradsatzes (RS3) der Planetenradträger (PT3) des dritten Planetenradsatzes (RS3) über das fünfte Schaltelement (E) und über die siebente Welle (VII) mit dem Sonnenrad (S03) des dritten Planetenradsatzes (RS3) verbindbar ist.

6. Planetengetriebe nach Anspruch 3, **dadurch gekennzeichnet, dass** zum Verblocken des dritten Planetenradsatzes (RS3) der Planetenradträger (PT3) des dritten Planetenradsatzes (RS3) über die achte Welle (VIII) und über das fünfte Schaltelement (E) sowie über die fünfte Welle (V) mit dem Hohlrad (H03) des dritten Planetenradsatzes (RS3) verbindbar ist.

7. Mehrgängiges Planetengetriebe für ein Fahrzeug mit vier Planetenradsätzen (RS1, RS2, RS3, RS4) und mit mehreren Wellen (I, II, III, IV, V, VI, VII, VIII, IX) sowie mit sechs Schaltelementen (A, B, C, D, E, F), durch deren Betätigung mehrere Gangstufen realisierbar sind, **dadurch gekennzeichnet, dass** der vierte Planetenradsatz (RS4) als Plus-Planetenradsatz ausgeführt ist, dass eine erste Welle (I) als Antrieb (An) mit einem Planetenradträger (PT1) des ersten Planetenradsatzes (RS1) und einem dritten Schaltelement (C) verbunden ist, dass eine zweite Welle (II) als Abtrieb (Ab) zumindest mit einem Hohlrad (H04) des vierten Planetenradsatzes (RS4) verbunden ist, dass zum Realisieren jeder Gangstufe mindestens vier der Schaltelemente (A, B, C, D, E, F) geschlossen sind, dass die erste Welle (I) als Antrieb (An) mit dem Planetenradträger (PT1) des ersten als Minus-Planetenradsatz ausgebildeten Planetenradsatzes (RS1) und mit dem dritten Schaltelement (C) verbunden ist, dass die zweite Welle (II) als Abtrieb (Ab) mit einem Planetenradträger (PT3) des dritten als Minus-Planetenradsatz ausgebildeten Planetenradsatzes (RS3) und mit dem Hohlrad (H04) des vierten Planetenradsatzes (RS 4) verbunden ist, dass eine dritte Welle (III) mit einem Hohlrad (H02) des zweiten als Minus-Planetenradsatz ausgebildeten Planetenradsatzes (RS2) und mit einem ersten Schaltelement (A) zur Gehäusekopplung verbunden ist, dass eine vierte Welle (IV) mit einem Sonnenrad (S04) des vierten Planetenradsatzes (RS4) und mit einem zweiten Schaltelement (B) zur Gehäusekopplung verbunden ist, dass eine fünfte Welle (V) mit einem Hohlrad (HO3) des dritten Planetenradsatzes (RS3) und mit einem vierten Schaltelement (D) verbunden ist, dass eine sechste Welle (VI) mit einem Hohlrad (HO1) des ersten Planetenradsatzes (RS1) und mit einem Planetenradträger (PT2) des zweiten Planetenradsatzes (RS2) sowie mit einem Planetenradträger (PT4) des vierten Planetenradsatzes (RS4) verbunden ist, dass eine siebente Welle (VII) mit einem Sonnenrad (SO1) des ersten Planetenradsatzes (RS1) und mit einem Sonnenrad (S03) des dritten Planetenradsatzes (RS3) sowie mit einem fünften Schaltelement (E) verbunden ist, und dass eine neunte Welle (IX) mit einem sechsten Schaltelement (F) und mit einem Sonnenrad (S02) des zweiten Planetenradsatzes (RS2) sowie mit dem dritten Schaltelement (C) verbunden ist.

8. Mehrgängiges Planetengetriebe für ein Fahrzeug mit vier Planetenradsätzen (RS1, RS2, RS3, RS4) und mit mehreren Wellen (I, II, III, IV, V, VI, VII, VIII, IX) sowie mit sechs Schaltelementen (A, B, C, D, E, F), durch deren Betätigung mehrere Gangstufen realisierbar sind, **dadurch gekennzeichnet, dass** der vierte Planetenradsatz (RS4) als Plus-Planetenradsatz ausgeführt ist, dass eine erste Welle (I) als Antrieb (An) mit einem Planetenradträger (PT1) des ersten Planetenradsatzes (RS1) und einem dritten Schaltelement (C) verbunden ist, dass eine zweite Welle (II) als Abtrieb (Ab) zumindest mit einem Hohlrad (H04) des vierten Planetenradsatzes (RS4) verbunden ist, dass zum Realisieren jeder Gangstufe mindestens vier der Schaltelemente (A, B, C, D, E, F) geschlossen sind, dass die erste Welle (I) als Antrieb (An) mit dem Planetenradträger (PT1) des ersten als Minus-Planetenradsatz ausgebildeten Planetenradsatzes (RS1) und dem dritten Schaltelement (C) verbunden ist, dass die zweite Welle (II) als Abtrieb (Ab) mit einem Planetenradträger (PT3) des dritten als Minus-Planetenradsatz ausgebildeten Planetenradsatzes (RS3) und mit dem Hohlrad (H04) des vierten Planetenradsatzes (RS4) verbunden ist, dass eine dritte Welle (III) mit einem Hohlrad (H02) des zweiten als Minus-Planetenradsatz ausgebildeten Planetenradsatzes (RS2) und mit einem ersten Schaltelement (A) zur Gehäusekopplung verbunden ist, dass eine vierte Welle (IV) mit einem Sonnenrad (S04) des vierten Planetenradsatzes (RS4) und mit einem zweiten Schaltelement (B) zur Gehäusekopplung verbunden ist, dass eine fünfte Welle (V) mit einem Hohlrad (H03) des dritten als Minus-Planetenradsatz ausgebildeten Planetenradsatzes (RS3) und mit einem fünften Schaltelement (E) sowie mit einem sechsten Schaltelement (F) verbunden ist, dass eine sechste Welle (VI) mit einem Hohlrad (H01) des ersten Planetenradsatzes (RS1) und mit einem Planetenradträger (PT2) des zweiten Planetenradsatzes (RS2) sowie mit einem Planetenradträger (PT4) des vierten Planetenradsatzes (RS4) verbunden ist, dass eine siebente Welle (VII) mit einem Sonnenrad (S01) des ersten Planetenradsatzes (RS1) und mit einem vierten Schaltelement (D) sowie mit dem fünften Schaltelement (E) verbunden ist, dass eine achte Welle (VIII) mit einem Sonnenrad (SO3) des dritten Planetenradsatzes (RS3) und mit dem vierten Schaltelement (D) verbunden ist, und dass eine neunte Welle (IX) mit dem sechsten Schaltelement (F) und mit einem Sonnen-rad (S02) des zweiten Planetenradsatzes (RS2) sowie mit dem dritten Schaltelement (C) verbunden ist.

9. Planetengetriebe nach einem der vorangehenden Ansprüche, **dadurch gekennzeichnet, dass** das erste Schaltelement (A) und das zweite Schaltelement (B) jeweils als Bremse ausgeführt sind, und dass das dritte Schaltelement (C), das vierte Schaltelement (D), das fünfte Schaltelement (E) und das sechste Schaltelement (F) jeweils als Kupplung ausgeführt sind.

10. Planetengetriebe nach Anspruch 9, **dadurch gekennzeichnet, dass** das zweite Schaltelement (B) und das sechste Schaltelement (F) jeweils als formschlüssiges oder reibschlüssiges Schaltelement ausführbar sind, wobei das erste Schaltelement (A), das dritte Schaltelement (C), das vierte Schaltelement (D) und das fünfte Schaltelement (E) jeweils als reibschlüssiges Schaltelement ausgeführt sind.

## Claims

1. Multi-speed planetary transmission for a vehicle, having four planetary gear sets (RS1, RS2, RS3, RS4) and having a plurality of shafts (I, II, III, IV, V, VI, VII, VIII, IX) and having six shift elements (A, B, C, D, E, F), the activation of which enables a plurality of gear speeds to be implemented, **characterized in that** the fourth planetary gear set (RS4) is embodied as a plus planetary gear set, **in that** a first shaft (I) is connected as a drive (An) to a planetary gear carrier (PT1) of the first planetary gear set (RS1) and to a third shift element (C), **in that** a second shaft (II) is connected as an output (Ab) at least to a ring gear (H04) of the fourth planetary gear set (RS4), and **in that**, in order to implement each gear speed, at least four of the shift elements (A, B, C, D, E, F) are closed, wherein the first shaft (I) is connected as a drive (An) to the planetary gear carrier (PT1) of the first planetary gear set (RS1), embodied as a minus planetary gear set, and to the third shift element (C), wherein the second shaft (II) is connected as an output (Ab) to a fourth shift element (D) and to the ring gear (H04) of the fourth planetary gear set (RS4), wherein a third shaft (III) is connected to a ring gear (H02) of the second planetary gear set (RS2), embodied as a minus planetary gear set, and to a first shift element (A) for coupling the housing, wherein a fourth shaft (IV) is connected to a sun gear (S04) of the fourth planetary gear set (RS4) and to a second shift element (B) for coupling the housing, wherein a fifth shaft (V) is connected to a ring gear (H03) of the third planetary gear set (RS3), embodied as a minus planetary gear set, and to a fifth shift element (E) and to a sixth shift element (F), wherein a sixth shaft (VI) is connected to a ring gear (HO1) of the first planetary gear set (RS1) and to a planetary gear carrier (PT2) of the second planetary gear set (RS2) as well as to a planetary gear carrier (PT4) of the fourth planetary gear set (RS4), wherein a seventh shaft (VII) is connected to a sun gear (SO1) of the first planetary gear set (RS1) and to a sun gear (S03) of the third planetary gear set (RS3) and to the fifth shift element (E), wherein an eighth shaft (VIII) is connected to a planetary carrier (PT3) of the third planetary gear set (RS3) and to the fourth shift element (D), and wherein a ninth shaft (IX) is connected to the sixth shift element (F) and to a sun gear (S02) of the second planetary gear set (RS2) as well as to the third shift element (C).

2. Multi-speed planetary transmission for a vehicle, having four planetary gear sets (RS1, RS2, RS3, RS4) and having a plurality of shafts (I, II, III, IV, V, VI, VII, VIII, IX) and having six shift elements (A, B, C, D, E, F), the activation of which enables a plurality of gear speeds to be implemented, **characterized in that** the fourth planetary gear set (RS4) is embodied as a plus planetary gear set, **in that** a first shaft (I) is connected as a drive (An) to a planetary gear carrier (PT1) of the first planetary gear set (RS1) and to a third shift element (C), **in that** a second shaft (II) is connected as an output (Ab) at least to a ring gear (H04) of the fourth planetary gear set (RS4), and **in that**, in order to implement each gear speed, at least four of the shift elements (A, B, C, D, E, F) are closed, wherein the first shaft (I) is connected as a drive (An) to the planetary gear carrier (PT1) of the first planetary gear set (RS1), embodied as a minus planetary gear set, and to the third shift element (C), wherein the second shaft (II) is connected as an output (Ab) to a fourth shift element (D) and to the ring gear (H04) of the fourth planetary gear set (RS4), wherein a third shaft (III) is connected to a ring gear (H02) of the second planetary gear set (RS2), embodied as a minus planetary gear set, and to a first shift element (A) for coupling the housing, wherein a fourth shaft (IV) is connected to a sun gear (S04) of the fourth planetary gear set (RS4) and to a second shift element (B) for coupling the housing, wherein a fifth shaft (V) is connected to a ring gear (H03) of the third planetary gear set (RS3), embodied as a minus planetary gear set, and to a sixth shift element (F), wherein a sixth shaft (VI) is connected to a ring gear (HO1) of the first planetary gear set (RS1) and to a planetary gear carrier (PT2) of the second planetary gear set (RS2) as well as to a planetary gear carrier (PT4) of the fourth planetary gear set (RS4), wherein a seventh shaft (VII) is connected to a sun gear (SO1) of the first planetary gear set (RS1) and to a sun gear (S03) of the third planetary gear set (RS3) and to a fifth shift element (E), wherein an eighth shaft (VIII) is connected to a planetary carrier (PT3) of the third planetary gear set (RS3) and to the fourth shift element (D), and wherein a ninth shaft (IX) is connected to the sixth shift element (F) and to a sun gear (S02) of the second planetary gear set (RS2) as well as to the third shift element (C).

3. Multi-speed planetary transmission for a vehicle, having four planetary gear sets (RS1, RS2, RS3, RS4) and having a plurality of shafts (I, II, III, IV, V, VI, VII, VIII, IX) and having six shift elements (A, B, C, D, E, F), the activation of which enables a plurality of gear speeds to be implemented, **characterized in that** the fourth planetary gear set (RS4) is embodied as a plus planetary gear set, **in that** a first shaft (I) is connected as a drive (An) to a planetary gear carrier (PT1) of the first planetary gear set (RS1) and to a third shift element (C), **in that** a second shaft (II) is connected as an output (Ab) at least to a ring gear (H04) of the fourth planetary gear set (RS4), and **in that**, in order to implement each gear speed, at least four of the shift elements (A, B, C, D, E, F) are closed, wherein the first shaft (I) is connected as a drive (An) to the planetary gear carrier (PT1) of the first planetary gear set (RS1), embodied as a minus planetary gear set, and to the third shift element (C), wherein the second shaft (II) is connected as an output (Ab) to a fourth shift element (D) and to the ring gear (H04) of the fourth planetary gear set (RS4), wherein a third shaft (III) is connected to a ring gear (H02) of the second planetary gear set (RS2), embodied as a minus planetary gear set, and to a first shift element (A) for coupling the housing, wherein a fourth shaft (IV) is connected to a sun gear (S04) of the fourth planetary gear set (RS4) and to a second shift element (B) for coupling the housing, wherein a fifth shaft (V) is connected to a ring gear (H03) of the third planetary gear set (RS3), embodied as a minus planetary gear set, and to a fifth shift element (E) and to a sixth shift element (F), wherein a sixth shaft (VI) is connected to a ring gear (HO1) of the first planetary gear set (RS1) and to a planetary gear carrier (PT2) of the second planetary gear set (RS2) as well as to a planetary gear carrier (PT4) of the fourth planetary gear set (RS4), wherein a seventh shaft (VII) is connected to a sun gear (SO1) of the first planetary gear set (RS1) and to a sun gear (SO3) of the third planetary gear set (RS3), wherein an eighth shaft (VIII) is connected to a planetary carrier (PT3) of the third planetary gear set (RS3) and to the fourth shift element (D), and wherein a ninth shaft (IX) is connected to the sixth shift element (F) and to a sun gear (S02) of the second planetary gear set (RS2) as well as to the third shift element (C).

4. Planetary transmission according to Claim 1, **characterized in that** in order to block the third planetary gear set (RS3), the ring gear (H03) of the third planetary gear set (RS3) can be connected to the sun gear (S03) of the third planetary gear set (RS3) via the fifth shaft (V) and via the fifth shift element (E).

5. Planetary transmission according to Claim 2, **characterized in that** in order to block the third planetary gear set (RS3), the planetary gear carrier (PT3) of the third planetary gear set (RS3) can be connected to the sun gear (S03) of the third planetary gear set (RS3) via the fifth shift element (E) and via the seventh shaft (VII).

6. Planetary transmission according to Claim 3, **characterized in that** in order to block the third planetary gear set (RS3), the planetary gear carrier (PT3) of the third planetary gear set (RS3) can be connected to the ring gear (H03) of the third planetary gear set (RS3) via the eighth shaft (VIII) and via the fifth shift element (E) as well as via the fifth shaft (V).

7. Multi-speed planetary transmission for a vehicle, having four planetary gear sets (RS1, RS2, RS3, RS4) and having a plurality of shafts (I, II, III, IV, V, VI, VII, VIII, IX) and having six shift elements (A, B, C, D, E, F), the activation of which enables a plurality of gear speeds to be implemented, **characterized in that** the fourth planetary gear set (RS4) is embodied as a plus planetary gear set, **in that** a first shaft (I) is connected as a drive (An) to a planetary gear carrier (PT1) of the first planetary gear set (RS1) and to a third shift element (C), **in that** a second shaft (II) is connected as an output (Ab) at least to a ring gear (H04) of the fourth planetary gear set (RS4), **in that**, in order to implement each gear speed, at least four of the shift elements (A, B, C, D, E, F) are closed, **in that** the first shaft (I) is connected as a drive (An) to the planetary gear carrier (PT1) of the first planetary gear set (RS1), embodied as a minus planetary gear set, and to the third shift element (C), **in that** the second shaft (II) is connected as an output (Ab) to a planetary gear carrier (PT3) of the third planetary gear set (RS3), embodied as a minus planetary gear set, and to the ring gear (H04) of the fourth planetary gear set (RS4), **in that** a third shaft (III) is connected to a ring gear (H02) of the second planetary gear set (RS2), embodied as a minus planetary gear set, and to a first shift element (A) for coupling the housing, **in that** a fourth shaft (IV) is connected to a sun gear (S04) of the fourth planetary gear set (RS4) and to a second shift element (B) for coupling the housing, **in that** a fifth shaft (V) is connected to a ring gear (H03) of the third planetary gear set (RS3) and to a fourth shift element (D), **in that** a sixth shaft (VI) is connected to a ring gear (HO1) of the first planetary gear set (RS1) and to a planetary gear carrier (PT2) of the second planetary gear set (RS2) as well as to a planetary gear carrier (PT4) of the fourth planetary gear set (RS4), **in that** a seventh shaft (VII) is connected to a sun gear (SO1) of the first planetary gear set (RS1) and to a sun gear (SO3) of the third planetary gear set (RS3) as well as to a fifth shift element (E), and **in that** a ninth shaft (IX) is connected to a sixth shift element (F) and to a sun gear (S02) of the second planetary gear set (RS2) as well as to the third shift element (C).

8. Multi-speed planetary transmission for a vehicle, having four planetary gear sets (RS1, RS2, RS3, RS4) and having a plurality of shafts (I, II, III, IV, V, VI, VII, VIII, IX) and having six shift elements (A, B, C, D, E, F), the activation of which enables a plurality of gear speeds to be implemented, **characterized in that** the fourth planetary gear set (RS4) is embodied as a plus planetary gear set, **in that** a first shaft (I) is connected as a drive (An) to a planetary gear carrier (PT1) of the first planetary gear set (RS1) and to a third shift element (C), **in that** a second shaft (II) is connected as an output (Ab) at least to a ring gear (H04) of the fourth planetary gear set (RS4), **in that**, in order to implement each gear speed, at least four of the shift elements (A, B, C, D, E, F) are closed, **in that** the first shaft (I) is connected as a drive (An) to the planetary gear carrier (PT1) of the first planetary gear set (RS1), embodied as a minus planetary gear set, and to the third shift element (C), **in that** the second shaft (II) is connected as an output (Ab) to a planetary gear carrier (PT3) of the third planetary gear set (RS3), embodied as a minus planetary gear set, and to the ring gear (H04) of the fourth planetary gear set (RS4), **in that** a third shaft (III) is connected to a ring gear (H02) of the second planetary gear set (RS2), embodied as a minus planetary gear set, and to a first shift element (A) for coupling the housing, **in that** a fourth shaft (IV) is connected to a sun gear (S04) of the fourth planetary gear set (RS4) and to a second shift element (B) for coupling the housing, **in that** a fifth shaft (V) is connected to a ring gear (H03) of the third planetary gear set (RS3), embodied as a minus planetary gear set, and to a fifth shift element (E) and to a sixth shift element (F), **in that** a sixth shaft (VI) is connected to a ring gear (HO1) of the first planetary gear set (RS1) and to a planetary gear carrier (PT2) of the second planetary gear set (RS2) as well as to a planetary gear carrier (PT4) of the fourth planetary gear set (RS4), **in that** a seventh shaft (VII) is connected to a sun gear (SO1) of the first planetary gear set (RS1) and to a fourth shift element (D) as well as to the fifth shift element (E), **in that** an eighth shaft (VIII) is connected to a sun gear (S03) of the third planetary gear set (RS3) and to the fourth shift element (D), and **in that** a ninth shaft (IX) is connected to the sixth shift element (F) and to a sun gear (S02) of the second planetary gear set (RS2) as well as to the third shift element (C).

9. Planetary transmission according to one of the preceding claims, **characterized in that** the first shift element (A) and the second shift element (B) are each embodied as a brake, and **in that** the third shift element (C), the fourth shift element (D), the fifth shift element (E) and the sixth shift element (F) are each embodied as a clutch.

10. Planetary transmission according to Claim 9, **characterized in that** the second shift element (B) and the sixth shift element (F) can each be implemented as a positively locking or frictionally locking shift element, wherein the first shift element (A), the third shift element (C), the fourth shift element (D) and the fifth shift element (E) are each embodied as a frictionally locking shift element.

## Revendications

1. Transmission planétaire à plusieurs rapports pour un véhicule comprenant quatre trains planétaires (RS1, RS2, RS3, RS4) et plusieurs arbres (I, II, III, IV, V, VI, VII, VIII, IX) ainsi que six éléments de changement de vitesses (A, B, C, D, E, F), dont l'actionnement permet de réaliser plusieurs rapports de vitesses, **caractérisée en ce que** le quatrième train planétaire (RS4) est réalisé en tant que train planétaire positif, **en ce qu'**un premier arbre (I) en tant qu'entraînement (An) est connecté à un porte-satellites (PT1) du premier train planétaire (RS1) et à un troisième élément de changement de vitesses (C), **en ce qu'**un deuxième arbre (II) en tant que prise de force (Ab) est connecté au moins à une couronne dentée (H04) du quatrième train planétaire (RS4), et **en ce que** pour réaliser chaque rapport de vitesses, au moins quatre des éléments de changement de vitesses (A, B, C, D, E, F) sont fermés, le premier arbre (I) en tant qu'entraînement (An) étant connecté au porte-satellites (PT1) du premier train planétaire (RS1) réalisé en tant que train planétaire négatif et au troisième élément de changement de vitesses (C), le deuxième arbre (II) étant connecté en tant que prise de force (Ab) à un quatrième élément de changement de vitesses (D) et à la couronne dentée (H04) du quatrième train planétaire (RS4), un troisième arbre (III) étant connecté à une couronne dentée (H02) du deuxième train planétaire (RS2) réalisé en tant que train planétaire négatif et à un premier élément de changement de vitesses (A) en vue de l'accouplement au boîtier, un quatrième arbre (IV) étant connecté à une roue solaire (S04) du quatrième train planétaire (RS4) et à un deuxième élément de changement de vitesses (B) en vue de l'accouplement au boîtier, un cinquième arbre (V) étant connecté à une couronne dentée (H03) du troisième train planétaire (RS3) réalisé en tant que train planétaire négatif et à un cinquième élément de changement de vitesses (E) et à un sixième élément de changement de vitesses (F), un sixième arbre (VI) étant connecté à une couronne dentée (HO1) du premier train planétaire (RS1) et à un porte-satellites (PT2) du deuxième train planétaire (RS2) et à un porte-satellites (PT4) du quatrième train planétaire (RS4), un septième arbre (VII) étant connecté à une roue solaire (SO1) du premier train planétaire (RS1) et à une roue solaire (S03) du troisième train planétaire (RS3) et au cinquième élément de changement de vitesses (E), un huitième arbre (VIII) étant connecté à un porte-satellites (PT3) du troisième train planétaire (RS3) et au quatrième élément de changement de vitesses (D), et un neuvième arbre (IX) étant connecté au sixième élément de changement de vitesses (F) et à une roue solaire (S02) du deuxième train planétaire (RS2) ainsi qu'au troisième élément de changement de vitesses (C).

2. Transmission planétaire à plusieurs rapports pour un véhicule comprenant quatre trains planétaires (RS1, RS2, RS3, RS4) et plusieurs arbres (I, II, III, IV, V, VI, VII, VIII, IX) ainsi que six éléments de changement de vitesses (A, B, C, D, E, F), dont l'actionnement permet de réaliser plusieurs rapports de vitesses, **caractérisée en ce que** le quatrième train planétaire (RS4) est réalisé en tant que train planétaire positif, **en ce qu'**un premier arbre (I) en tant qu'entraînement (An) est connecté à un porte-satellites (PT1) du premier train planétaire (RS1) et à un troisième élément de changement de vitesses (C), **en ce qu'**un deuxième arbre (II) en tant que prise de force (Ab) est connecté au moins à une couronne dentée (H04) du quatrième train planétaire (RS4), et **en ce que** pour réaliser chaque rapport de vitesses, au moins quatre des éléments de changement de vitesses (A, B, C, D, E, F) sont fermés, le premier arbre (I) en tant qu'entraînement (An) étant connecté au porte-satellites (PT1) du premier train planétaire (RS1) réalisé en tant que train planétaire négatif et au troisième élément de changement de vitesses (C), le deuxième arbre (II) étant connecté en tant que prise de force (Ab) à un quatrième élément de changement de vitesses (D) et à la couronne dentée (H04) du quatrième train planétaire (RS4), un troisième arbre (III) étant connecté à une couronne dentée (H02) du deuxième train planétaire (RS2) réalisé en tant que train planétaire négatif et à un premier élément de changement de vitesses (A) en vue de l'accouplement au boîtier, un quatrième arbre (IV) étant connecté à une roue solaire (S04) du quatrième train planétaire (RS4) et à un deuxième élément de changement de vitesses (B) en vue de l'accouplement au boîtier, un cinquième arbre (V) étant connecté à une couronne dentée (H03) du troisième train planétaire (RS3) réalisé en tant que train planétaire négatif et à un sixième élément de changement de vitesses (F), un sixième arbre (VI) étant connecté à une couronne dentée (HO1) du premier train planétaire (RS1) et à un porte-satellites (PT2) du deuxième train planétaire (RS2) ainsi qu'à un porte-satellites (PT4) du quatrième train planétaire (RS4), un septième arbre (VII) étant connecté à une roue solaire (SO1) du premier train planétaire (RS1) et à une roue solaire (SO3) du troisième train planétaire (RS3) et à un cinquième élément de changement de vitesses (E), un huitième arbre (VIII) étant connecté à un porte-satellites (PT3) du troisième train planétaire (RS3) et au quatrième élément de changement de vitesses (D), et un neuvième arbre (IX) étant connecté au sixième élément de changement de vitesses (F) et à une roue solaire (S02) du deuxième train planétaire (RS2) ainsi qu'au troisième élément de changement de vitesses (C).

3. Transmission planétaire à plusieurs rapports pour un véhicule comprenant quatre trains planétaires (RS1, RS2, RS3, RS4) et plusieurs arbres (I, II, III, IV, V, VI, VII, VIII, IX) ainsi que six éléments de changement de vitesses (A, B, C, D, E, F), dont l'actionnement permet de réaliser plusieurs rapports de vitesses, **caractérisée en ce que** le quatrième train planétaire (RS4) est réalisé en tant que train planétaire positif, **en ce qu'**un premier arbre (I) en tant qu'entraînement (An) est connecté à un porte-satellites (PT1) du premier train planétaire (RS1) et à un troisième élément de changement de vitesses (C), **en ce qu'**un deuxième arbre (II) en tant que prise de force (Ab) est connecté au moins à une couronne dentée (H04) du quatrième train planétaire (RS4), et **en ce que** pour réaliser chaque rapport de vitesses, au moins quatre des éléments de changement de vitesses (A, B, C, D, E, F) sont fermés, le premier arbre (I) en tant qu'entraînement (An) étant connecté au porte-satellites (PT1) du premier train planétaire (RS1) réalisé en tant que train planétaire négatif et au troisième élément de changement de vitesses (C), le deuxième arbre (II) étant connecté en tant que prise de force (Ab) à un quatrième élément de changement de vitesses (D) et à la couronne dentée (H04) du quatrième train planétaire (RS4), un troisième arbre (III) étant connecté à une couronne dentée (H02) du deuxième train planétaire (RS2) réalisé en tant que train planétaire négatif et à un premier élément de changement de vitesses (A) en vue de l'accouplement au boîtier, un quatrième arbre (IV) étant connecté à une roue solaire (S04) du quatrième train planétaire (RS4) et à un deuxième élément de changement de vitesses (B) en vue de l'accouplement au boîtier, un cinquième arbre (V) étant connecté à une couronne dentée (H03) du troisième train planétaire (RS3) réalisé en tant que train planétaire négatif et à un cinquième élément de changement de vitesses (E) et à un sixième élément de changement de vitesses (F), un sixième arbre (VI) étant connecté à une couronne dentée (HO1) du premier train planétaire (RS1) et à un porte-satellites (PT2) du deuxième train planétaire (RS2) ainsi qu'à un porte-satellites (PT4) du quatrième train planétaire (RS4), un septième arbre (VII) étant connecté à une roue solaire (SO1) du premier train planétaire (RS1) et à une roue solaire (S03) du troisième train planétaire (RS3), un huitième arbre (VIII) étant connecté à un porte-satellites (PT3) du troisième train planétaire (RS3) et au quatrième élément de changement de vitesses (D), et un neuvième arbre (IX) étant connecté au sixième élément de changement de vitesses (F) et à une roue solaire (S02) du deuxième train planétaire (RS2) ainsi qu'au troisième élément de changement de vitesses (C).

4. Transmission planétaire selon la revendication 1, **caractérisée en ce que** pour le blocage du troisième train planétaire (RS3), la couronne dentée (H03) du troisième train planétaire (RS3) peut être connectée par le biais du cinquième arbre (V) et par le biais du cinquième élément de changement de vitesses (E) à la roue solaire (SO3) du troisième train planétaire (RS3).

5. Transmission planétaire selon la revendication 2, **caractérisée en ce que** pour le blocage du troisième train planétaire (RS3), le porte-satellites (PT3) du troisième train planétaire (RS3) peut être connecté par le biais du cinquième élément de changement de vitesses (E) et par le biais du septième arbre (VII) à la roue solaire (S03) du troisième train planétaire (RS3).

6. Transmission planétaire selon la revendication 3, **caractérisée en ce que** pour le blocage du troisième train planétaire (RS3), le porte-satellites (PT3) du troisième train planétaire (RS3) peut être connecté par le biais du huitième arbre (VIII) et par le biais du cinquième élément de changement de vitesses (E) ainsi que par le biais du cinquième arbre (V) à la couronne dentée (H03) du troisième train planétaire (RS3).

7. Transmission planétaire à plusieurs rapports pour un véhicule comprenant quatre trains planétaires (RS1, RS2, RS3, RS4) et plusieurs arbres (I, II, III, IV, V, VI, VII, VIII, IX) ainsi que six éléments de changement de vitesses (A, B, C, D, E, F), dont l'actionnement permet de réaliser plusieurs rapports de vitesses, **caractérisée en ce que** le quatrième train planétaire (RS4) est réalisé en tant que train planétaire positif, **en ce qu'**un premier arbre (I) en tant qu'entraînement (An) est connecté à un porte-satellites (PT1) du premier train planétaire (RS1) et à un troisième élément de changement de vitesses (C), **en ce qu'**un deuxième arbre (II) en tant que prise de force (Ab) est connecté au moins à une couronne dentée (H04) du quatrième train planétaire (RS4), et **en ce que** pour réaliser chaque rapport de vitesses, au moins quatre des éléments de changement de vitesses (A, B, C, D, E, F) sont fermés, **en ce que** le premier arbre (I) en tant qu'entraînement (An) est connecté au porte-satellites (PT1) du premier train planétaire (RS1) réalisé en tant que train planétaire négatif et au troisième élément de changement de vitesses (C), **en ce que** le deuxième arbre (II) en tant que prise de force (Ab) est connecté à un porte-satellites (PT3) du troisième train planétaire (RS3) réalisé en tant que train planétaire négatif et à la couronne dentée (H04) du quatrième train planétaire (RS4), **en ce qu'**un troisième arbre (III) est connecté à une couronne dentée (H02) du deuxième train planétaire (RS2) réalisé en tant que train planétaire négatif et à un premier élément de changement de vitesses (A) en vue de l'accouplement au boîtier, **en ce qu'**un quatrième arbre (IV) est connecté à une roue solaire (S04) du quatrième train planétaire (RS4) et à un deuxième élément de changement de vitesses (B) en vue de l'accouplement au boîtier, **en ce qu'**un cinquième arbre (V) est connecté à une couronne dentée (H03) du troisième train planétaire (RS3) et à un quatrième élément de changement de vitesses (D), **en ce qu'**un sixième arbre (VI) est connecté à une couronne dentée (HO1) du premier train planétaire (RS1) et à un porte-satellites (PT2) du deuxième train planétaire (RS2) ainsi qu'à un porte-satellites (PT4) du quatrième train planétaire (RS4), **en ce qu'**un septième arbre (VII) est connecté à une roue solaire (SO1) du premier train planétaire (RS1) et à une roue solaire (S03) du troisième train planétaire (RS3) ainsi qu'à un cinquième élément de changement de vitesses (E), et **en ce qu'**un neuvième arbre (IX) est connecté à un sixième élément de changement de vitesses (F) et à une roue solaire (S02) du deuxième train planétaire (RS2) ainsi qu'au troisième élément de changement de vitesses (C).

8. Transmission planétaire à plusieurs rapports pour un véhicule comprenant quatre trains planétaires (RS1, RS2, RS3, RS4) et plusieurs arbres (I, II, III, IV, V, VI, VII, VIII, IX) ainsi que six éléments de changement de vitesses (A, B, C, D, E, F), dont l'actionnement permet de réaliser plusieurs rapports de vitesses, **caractérisée en ce que** le quatrième train planétaire (RS4) est réalisé en tant que train planétaire positif, **en ce qu'**un premier arbre (I) en tant qu'entraînement (An) est connecté à un porte-satellites (PT1) du premier train planétaire (RS1) et à un troisième élément de changement de vitesses (C), **en ce qu'**un deuxième arbre (II) en tant que prise de force (Ab) est connecté au moins à une couronne dentée (H04) du quatrième train planétaire (RS4), et **en ce que** pour réaliser chaque rapport de vitesses, au moins quatre des éléments de changement de vitesses (A, B, C, D, E, F) sont fermés, **en ce que** le premier arbre (I) en tant qu'entraînement (An) est connecté au porte-satellites (PT1) du premier train planétaire (RS1) réalisé en tant que train planétaire négatif et au troisième élément de changement de vitesses (C), **en ce que** le deuxième arbre (II) en tant que prise de force (Ab) est connecté à un porte-satellites (PT3) du troisième train planétaire (RS3) réalisé en tant que train planétaire négatif et à la couronne dentée (H04) du quatrième train planétaire (RS4), **en ce qu'**un troisième arbre (III) est connecté à une couronne dentée (H02) du deuxième train planétaire (RS2) réalisé en tant que train planétaire négatif et à un premier élément de changement de vitesses (A) en vue de l'accouplement au boîtier, **en ce qu'**un quatrième arbre (IV) est connecté à une roue solaire (S04) du quatrième train planétaire (RS4) et à un deuxième élément de changement de vitesses (B) en vue de l'accouplement au boîtier, **en ce qu'**un cinquième arbre (V) est connecté à une couronne dentée (H03) du troisième train planétaire (RS3) réalisé en tant que train planétaire négatif et à un cinquième élément de changement de vitesses (E) ainsi qu'à un sixième élément de changement de vitesses (F), **en ce qu'**un en ce qu'un sixième arbre (VI) est connecté à une couronne dentée (HO1) du premier train planétaire (RS1) et à un porte-satellites (PT2) du deuxième train planétaire (RS2) ainsi qu'à un porte-satellites (PT4) du quatrième train planétaire (RS4), **en ce qu'**un septième arbre (VII) est connecté à une roue solaire (SO1) du premier train planétaire (RS1) et à un quatrième élément de changement de vitesses (D) ainsi qu'au cinquième élément de changement de vitesses (E), **en ce qu'**un huitième arbre (VIII) est connecté à une roue solaire (S03) du troisième train planétaire (RS3) et au quatrième élément de changement de vitesses (D), et **en ce qu'**un neuvième arbre (IX) est connecté au sixième élément de changement de vitesses (F) et à une roue solaire (S02) du deuxième train planétaire (RS2) ainsi qu'au troisième élément de changement de vitesses (C).

9. Transmission planétaire selon l'une quelconque des revendications précédentes, **caractérisée en ce que** le premier élément de changement de vitesses (A) et le deuxième élément de changement de vitesses (B) sont à chaque fois réalisés en tant que frein, et **en ce que** le troisième élément de changement de vitesses (C), le quatrième élément de changement de vitesses (D), le cinquième élément de changement de vitesses (E) et le sixième élément de changement de vitesses (F) sont à chaque fois réalisés en tant qu'embrayage.

10. Transmission planétaire selon la revendication 9, **caractérisée en ce que** le deuxième élément de changement de vitesses (B) et le sixième élément de changement de vitesses (F) peuvent à chaque fois être réalisés en tant qu'éléments de changement de vitesses à engagement par correspondance de formes ou à engagement par friction, le premier élément de changement de vitesses (A) le troisième élément de changement de vitesses (C), le quatrième élément de changement de vitesses (D) et le cinquième élément de changement de vitesses (E) étant à chaque fois réalisés en tant qu'élément de changement de vitesses à engagement par friction.
